# EUROPEAN PATENT APPLICATION

(11) **EP 4 625 794 A1**
(43) Date of publication of application: **01.10.2025**
(21) Application number: 24201629.3
(22) Date of filing: 20.09.2024
(51) Int. Cl.: H02M 1/32, H02M 7/487, H02M 1/36

(54) **POWER CONVERSION SYSTEM, POWER CONVERTER AND METHOD FOR CONTROLLING POWER CONVERTER**

(30) Priority: 25.03.2024 CN 202410346586
(71) Applicant: Sungrow Power Supply Co., Ltd., Hefei, Anhui 230088 (CN)
(72) Inventor: HU, Fanyu, Hefei, 230088 (CN); CAO, Jinhu, Hefei, 230088 (CN); PAN, Nianan, Hefei, 230088 (CN); ZHUANG, Jiacai, Hefei, 230088 (CN); WU, Yongfu, Hefei, 230088 (CN)
(74) Representative: Zacco Norway AS

(57) **Abstract**

This application provides a power conversion system, a power converter, and a method for controlling the power converter, which relates to the technical field of power electronics. With the method, the power conversion topology is switched from an operating mode to a clamping mode upon receiving a shutdown signal, to clamp a voltage at an AC side of the power conversion topology within a predetermined range, and thus a half-bridge arm of the power conversion topology bears a controllable voltage. Further, the power conversion topology is switched from the clamping mode to a shutdown mode if an absolute value of current at the AC side of the power conversion topology is less than a predetermined threshold, so that a voltage borne by each switching transistor in the half-bridge arm of the power conversion topology in the shutdown mode is within a withstand voltage range of the switching transistor, thereby avoiding a failure of an element at an inner transistor position in the power conversion topology due to overvoltage stress during reverse recovery of a diode in the shutdown mode.

## Description

### FIELD

The present disclosure relates to the technical field of power electronics, and in particular to a power conversion system, a power converter, and a method for controlling the power converter.

### BACKGROUND

A power conversion topology in a power converter such as an inverter generally exists in two modes, i.e., an operating mode during normal operation and a shutdown mode in which all inner switching transistors are switched off. In conventional technology, in a case that the power conversion topology is switched from the operating mode to the shutdown mode, an element at an inner transistor position in the topology is prone to failure due to overvoltage stress during reverse recovery of a diode in the shutdown mode.

### SUMMARY

In view of the above, a power conversion system, a power converter, and a method for controlling the power converter are provided according to the present disclosure, to solve a problem of a failure of an element at an inner transistor position in a power conversion topology due to overvoltage stress in a shutdown mode in the conventional technology.

In order to achieve the above objective, the following technical solutions are provided according to the present disclosure.

In a first aspect of the present disclosure, a method for controlling a power converter is provided, where the power converter includes a power conversion topology of at least one phase, the power conversion topology is a three-level topology, and the method includes:

switching the power conversion topology from an operating mode to a clamping mode upon receiving a shutdown signal, to clamp a voltage at an alternating current, AC, side of the power conversion topology within a predetermined range;
determining whether an absolute value of current at the AC side of the power conversion topology is less than a predetermined threshold; and
switching the power conversion topology from the clamping mode to a shutdown mode, if the absolute value of the current at the AC side of the power conversion topology is less than the predetermined threshold.

In an embodiment, the predetermined range is greater than or equal to a neutral point potential of a direct current, DC, side of the power conversion topology if the current at the AC side of the power conversion topology flows into the power conversion topology; and
the predetermined range is less than or equal to the neutral point potential of the DC side of the power conversion topology if the current at the AC side of the power conversion topology outflows from the power conversion topology.

In an embodiment, the switching the power conversion topology from an operating mode to a clamping mode includes:
switching off a non-freewheeling transistor of the power conversion topology; and
switching on at least one first freewheeling transistor of freewheeling transistors in the power conversion topology, and switching off remaining freewheeling transistors; where the freewheeling transistor is a switching transistor forming a zero-level path in the power conversion topology, and the first freewheeling transistor is a freewheeling transistor including a freewheeling diode with a conduction direction that is the same as a direction of the current at the AC side of the power conversion topology; and the non-freewheeling transistor is a switching transistor in the power conversion topology other than the freewheeling switching transistor.

In an embodiment, the switching on at least one first freewheeling transistor of freewheeling transistors in the power conversion topology includes:
determining the direction of the current at the AC side of the power conversion topology from a detection result of the current at the AC side of the power conversion topology; and
determining the first freewheeling transistor based on the direction of the current at the AC side of the power conversion topology and switching on the first freewheeling transistor.

In an embodiment, the power conversion topology is a three-level ANPC topology,
the first freewheeling transistor includes at least one of an inner transistor at an upper bridge arm of the power conversion topology and a clamping transistor at a lower bridge arm of the power conversion topology if the current at the AC side of the power conversion topology flows into the power conversion topology; and
the first freewheeling transistor includes at least one of an inner transistor at the lower bridge arm of the power conversion topology and a clamping transistor at the upper bridge arm of the power conversion topology if the current at the AC side of the power conversion topology outflows from the power conversion topology.

In an embodiment, the power conversion topology is a three-level NPC topology,
the first freewheeling transistor is an inner transistor at an upper bridge arm of the power conversion topology if the current at the AC side of the power conversion topology flows into the power conversion topology; and
the first freewheeling transistor is an inner transistor at a lower bridge arm of the power conversion topology if the current at the AC side of the power conversion topology outflows from the power conversion topology.

In an embodiment, the at least one first freewheeling transistor of freewheeling transistors in the power conversion topology is switched on in a real time manner or periodically.

In an embodiment, the switching the power conversion topology from the clamping mode to a shutdown mode includes:
switching off all switching transistors in the power conversion topology.

In a second aspect of the present disclosure, a power converter is further provided, which includes a main circuit and a controller, where
the main circuit includes a power conversion topology of at least one phase;
the power conversion topology is a three-level topology,
the main circuit is controlled by the controller, and
the controller is configured to perform the method for controlling a power converter in the first aspect described above.

In an embodiment, the power conversion topology is a three-level ANPC topology or a three-level NPC topology.

In an embodiment, the main circuit includes the power conversion topology of one phase, or the main circuit includes the power conversion topologies of three phases, and direct current of the power conversion topologies of three phases are connected in parallel.

In an embodiment, the power conversion topology is an integral package structure or a separate package structure.

In an embodiment, the main circuit further includes: at least one preceding-stage conversion circuit;
the at least one preceding-stage conversion circuit is connected to the DC side of the power conversion topology via a DC bus; and
the at least one preceding-stage conversion circuit is controlled by the controller.

In an embodiment, the at least one preceding-stage conversion circuit is a DC/DC conversion circuit or an AC /DC conversion circuit.

In a third aspect of the present disclosure, a power conversion system is further provided, including: a power supply and the power converter in the second aspect described above, where
the power supply is connected to a power grid and/or a load through the power converter.

The present disclosure provides a method for controlling a power converter. With the method for controlling a power converter, the power conversion topology is switched from an operating mode to a clamping mode upon receiving a shutdown signal, to clamp a voltage at an AC side of the power conversion topology within a predetermined range, and thus a half-bridge arm of the power conversion topology bears a controllable voltage. Further, the power conversion topology is switched from the clamping mode to a shutdown mode if an absolute value of current at the AC side of the power conversion topology is less than a predetermined threshold, so that a voltage borne by each switching transistor in the half-bridge arm of the power conversion topology in the shutdown mode is within a withstand voltage range of the switching transistor, thereby avoiding a failure of an element at an inner transistor position in the power conversion topology due to overvoltage stress during reverse recovery of a diode in the shutdown mode.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the provided drawings without any creative work.
Figure 1 is a schematic diagram of an integral package structure of a three-level ANPC topology according to an embodiment of the present disclosure;
Figure 2 is a schematic diagram of a separate package structure of a three-level ANPC topology according to an embodiment of the present disclosure;
Figure 3 is a schematic diagram of an integral package structure of a three-level NPC topology according to an embodiment of the present disclosure;
Figure 4 is a schematic diagram of a separate package structure of a three-level NPC topology according to an embodiment of the present disclosure;
Figure 5 is a schematic diagram of a commutation path with respect to the structure shown in the Figure 1 if all switching transistors are switched off in a case that current at an AC side of a topology is negative;
Figure 6 is a schematic diagram of a commutation path with respect to the structure shown in the Figure 1 in a process of reverse recovery of a diode after a current at an AC side decreases to zero in a case that the current at the AC side of a topology is negative;
Figure 7 is a schematic diagram of a commutation path with respect to the structure shown in the Figure 1 if all switching transistors are switched off in a case that current at an AC side of a topology is positive;
Figure 8 is a schematic diagram of a commutation path with respect to the structure shown in the Figure 1 in a process of reverse recovery of a diode after a current at an AC side reaches zero in a case that the current at the AC side of a topology is positive;
Figure 9 is a schematic diagram of a commutation path with respect to the structure shown in the Figure 2 if all switching transistors are switched off in a case that a current at an AC side of a topology is negative;
Figure 10 is a schematic diagram of a commutation path with respect to the structure shown in the Figure 2 in a process of reverse recovery of a diode after a current at an AC side decreases to zero in a case that the current at the AC side of a topology is negative;
Figure 11 is a schematic diagram of a commutation path with respect to the structure shown in the Figure 2 if all switching transistors are switched off in a case that a current at an AC side of a topology is positive;
Figure 12 is a schematic diagram of a commutation path with respect to the structure shown in the Figure 2 in a process of reverse recovery of a diode after a current at an AC side decreases to zero in a case that the current at the AC side of a topology is positive;
Figure 13 is a flowchart of a method for controlling a power converter according to an embodiment of the present disclosure;
Figure 14 is a specific flowchart of a method for controlling a power converter according to an embodiment of the present disclosure;
Figure 15 is a schematic diagram of a commutation path during a time period from a time instant t2 to a time instant t3 in Figure 17 in a case that current at an AC side of a topology shown in the Figure 1 is negative and the topology enters a clamping mode according to an embodiment of the present disclosure;
Figure 16 is a schematic diagram of a commutation path during a time period from a time instant t2 to a time instant t3 in Figure 17 in a case that current at an AC side of a topology shown in the Figure 1 is positive and the topology enters a clamping mode according to an embodiment of the present disclosure;
Figure 17 is a switching sequence diagram corresponding to a case that the structure shown in the Figure 1 or the Figure 2 performs a method for controlling a power converter according to an embodiment of the present disclosure;
Figure 18 is a schematic diagram of a commutation path during a time period from a time instant t3 to a time instant when an inner transistor T2 is switched off in Figure 17 in a case that current at an AC side of a topology shown in the Figure 1 is negative and the topology enters a clamping mode according to an embodiment of the present disclosure;
Figure 19 is a schematic diagram of a commutation path during a time period from a time instant t3 to a time instant when an inner transistor T2 is switched off in Figure 17 in a case that current at an AC side of a topology shown in the Figure 1 is positive and the topology enters a clamping mode according to an embodiment of the present disclosure;
Figure 20 is a switching sequence diagram corresponding to a case that the structure shown in the Figure 1 or the Figure 2 performs a method for controlling a power converter according to another embodiment of the present disclosure;
Figure 21 is a schematic diagram of a commutation path during a time period from a time point t2 to a time instant t3 in Figure 23 in a case that current at an AC side of a topology shown in the Figure 1 is negative and the topology enters a clamping mode according to an embodiment of the present disclosure;
Figure 22 is a schematic diagram of a commutation path during a time period from a time point t2 to a time instant t3 in Figure 23 in a case that current at an AC side of a topology shown in the Figure 1 is positive and the topology enters a clamping mode according to an embodiment of the present disclosure;
Figure 23 is a switching sequence diagram corresponding to a case that the structure shown in the Figure 1 or the Figure 2 performs a method for controlling a power converter according to another embodiment of the present disclosure;
Figure 24 is a switching sequence diagram corresponding to a case that the structure shown in the Figure 1 or the Figure 2 performs a method for controlling a power converter according to another embodiment of the present disclosure;
Figure 25 is a switching sequence diagram corresponding to a case that the structure shown in the Figure 1 or the Figure 2 performs a method for controlling a power converter according to another embodiment of the present disclosure; and
Figure 26 is a switching sequence diagram corresponding to a case that the structure shown in the Figure 1 or the Figure 2 performs a method for controlling a power converter according to another embodiment of the present disclosure.

### DETAILED DESCRIPTION

The technical solutions in the embodiments of the present disclosure are described clearly and completely in conjunction with the drawings in the embodiments of the present disclosure hereinafter. It is apparent that the described embodiments are only some rather than all embodiments of the present disclosure. All other embodiments obtained by those skilled in the art based on the embodiments of the present disclosure without any creative work fall within the protection scope of the present disclosure.

In the present disclosure, terms of "include", "comprise" or any other variants are intended to be non-exclusive. Therefore, a process, method, article or device including a series of elements includes not only the elements but also other elements that are not enumerated, or further includes the elements inherent for the process, method, article or device. Unless expressively limited otherwise, the statement "comprising (including) one..." does not exclude existence of other similar elements in the process, method, article or device.

A neutral point clamped (NPC) topology and an active neutral point clamped (ANPC) topology are widely applied in a power converter, such as an inverter. In particular, compared with the conventional NPC topology, the ANPC topology realizes neutral-point clamping by replacing a diode with a fully-controlled switching element and a freewheeling diode in the element, achieving a redundant driving allocation and enhancing freedom in system control.

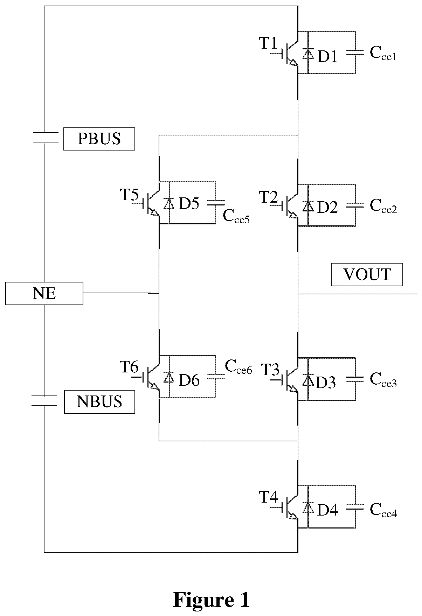

Figure 1 is a structural diagram of a three-level ANPC topology including six switching transistors T1 to T6. Among the switching transistors T1 to T6, both a switching transistor T1 connected to a positive electrode of a DC side of the topology and a switching transistor T4 connected to a negative electrode of the DC side of the topology are outer transistors, both switching transistors T2 and T3 connected to an AC side of the topology are inner transistors, and both switching transistors T5 and T6 connected to a neutral point of the DC side of the topology are clamping transistors. D1 to D6 represent freewheeling diodes such as anti-parallel diodes included in the switching transistors T1 to T6, respectively. C_{ce1} to C_{ce6} equivalently illustrate junction capacitance in the switching transistors T1 to T6, respectively. The topology may be configured to perform inversion or rectification. VOUT in the Figure 1 represents a voltage at the AC side of the topology, i.e., an output voltage of the topology performing inversion. Further, PBUS represents an upper half bus voltage of a DC bus connected to the DC side of the topology, NUBS represents a lower half bus voltage of the DC bus, and NE represents a neutral point potential of the DC side of the topology, i.e., a neutral point potential of the DC bus. A voltage at a positive electrode of the DC bus is set as 1 level, the neutral point potential NE of the DC bus is set as zero level, and a voltage at negative electrode of the DC bus is set as -1 level. Since all of the inner transistors T2 and T3 and the clamping transistors T5 and T6 are in a freewheeling path of the three-level ANPC topology and are switching transistors forming a zero-level path in the topology, the transistors T2, T3, T5, and T6 may be referred to as freewheeling transistors. Other switching transistors, i.e., the outer transistors T1 and T4, may be referred to as non-freewheeling transistors.

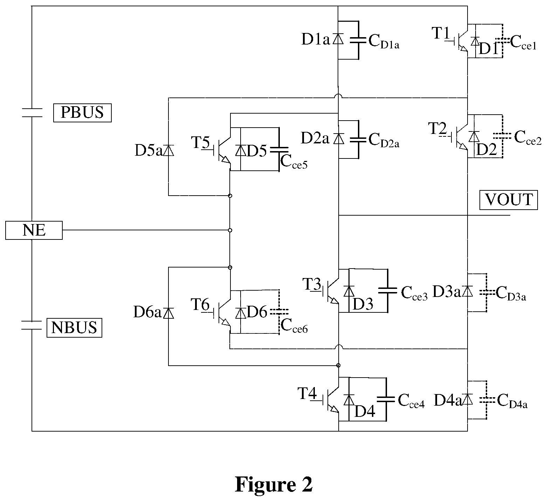

Different from the integral package structure shown in the Figure 1, Figure 2 shows another structure derived from the three-level ANPC topology, i.e., a separate package structure. The separate package structure is packaged into two power modules based on a direction of the current at the AC side of the topology. If a direction of the current at the AC side flowing into the topology is defined as negative, and a direction of the current at the AC side outflowing from the topology is defined as positive, elements shown by dashed lines in the Figure 2 are packaged into a power module of which the current at the AC side is positive and elements shown by solid lines in the Figure 2 are packaged into a power module of which the current at the AC side is negative. In the Figure 2, D1a to D6a represent independent diodes, and C_{D1a} to C_{D4a} equivalently illustrate respective junction capacitance corresponding to D1a to D4a.

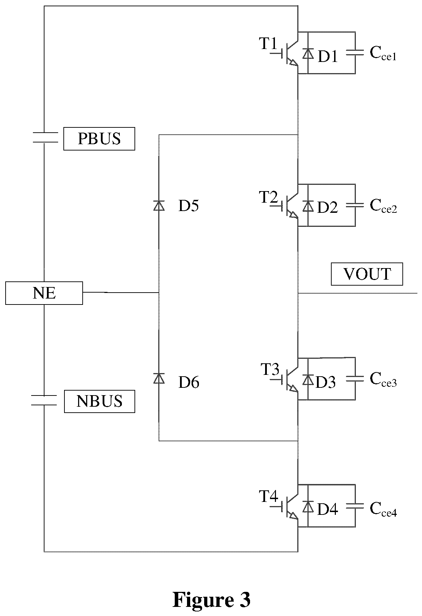

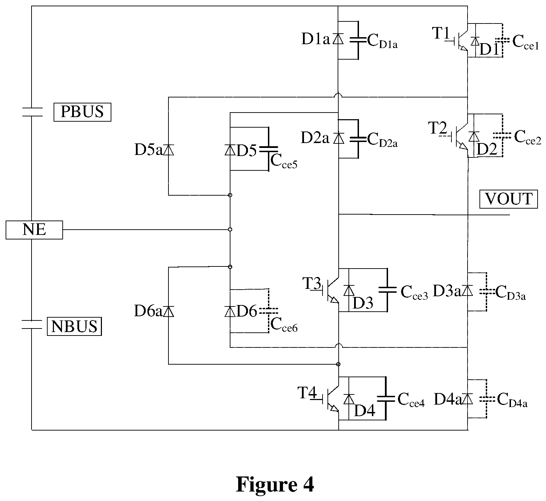

Figure 3 is a diagram of an integral package structure of a three-level NPC topology, which differs from the three-level ANPC topology shown in the Figure 1 in that clamping diodes D5 and D6 are provided at corresponding positions instead of the clamping transistors T5 and T6. Therefore, switching transistors in the three-level NPC topology include two non-freewheeling transistors T1 and T4 and two freewheeling transistors T2 and T3. Similarly, Figure 4 shows a diagram of a separate package structure of a three-level NPC topology.

The following description is made by taking the three-level ANPC topology as an example. During operation of a power converter in the three-level ANPC topology, in a case that the power converter operates in a state, all switching transistors T1 to T6 in the topology are switched off, i.e., all switching transistors T1 to T6 are switched to an off state, and the off state of the topology is referred to as a shutdown mode hereinafter. During normal operation of the power converter, switching transistors T1 to T6 in the topology are switched on and off in accordance with respective inherent switching manners to maintain the normal operation of the topology, and the normal operation state of the topology is referred to as an operating mode hereinafter.

Conventionally, if the power converter controls the topology to switch from the operating mode to the shutdown mode, in response to respective control instructions, the outer transistors T1 and T4 are usually switched off first, then the inner transistors T2 and T3 and the clamping transistors T5 and T6 are switched off. With such switching-off method, voltages borne by switching transistors and diodes are beyond respective design ranges during switching between the two modes, thus resulting in a failure of the switching transistors or diodes due to overvoltage.

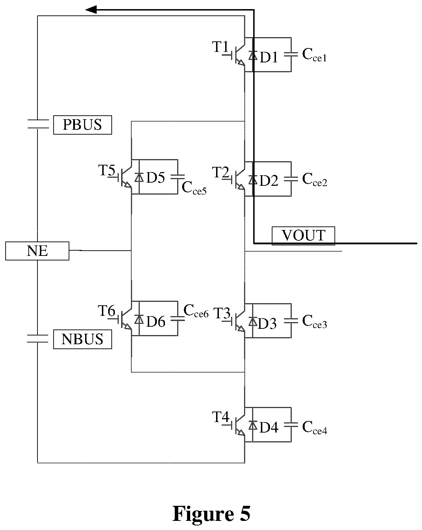

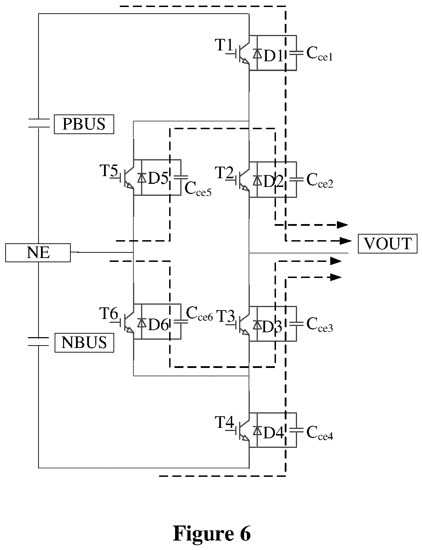

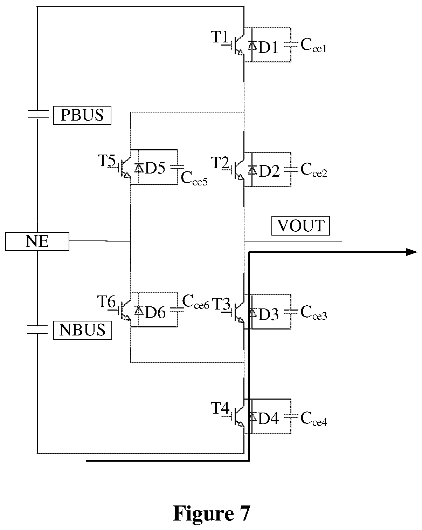

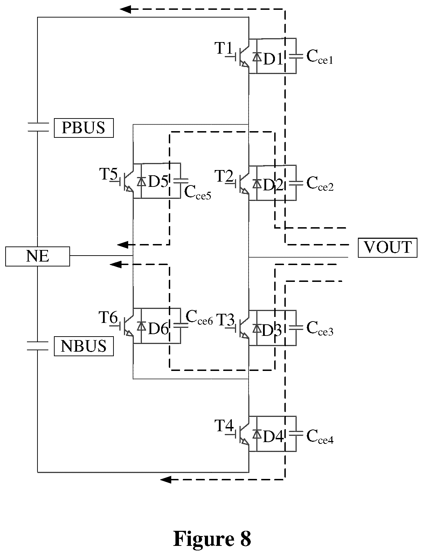

Specifically, taking the integral package structure of the three-level ANPC topology shown in the Figure 1 as an example, in a case that the topology is switched from the operating mode to the shutdown mode if the current at the AC side is negative, a commutation path when all switching transistors in the topology are switched off is shown as a solid line with an arrow in Figure 5, and a commutation path during reverse recovery of a diode after the current at the AC side decreases to zero is shown as dashed lines with arrows in Figure 6. In a case that the topology is switched from the operating mode to the shutdown mode if the current at the AC side is positive, a commutation path when all switching transistors in the topology are switched off is shown as a solid line with an arrow in Figure 7, and a commutation path during reverse recovery of a diode after the current at the AC side decreases to zero is shown as dashed lines with arrows in Figure 8.

As shown in Figure 5, the commutation path is from the AC side of the topology through the freewheeling diode D2 and the freewheeling diode D1 to the positive electrode of the DC bus in sequence. Potential at all points in the path are equal to each other. In such case, the voltage VOUT at the AC side of the topology is 1 level. From the Figure 5 to Figure 6, a process of the current at the AC side from presence to absence is illustrated, accompanied by a process of the voltage VOUT at the AC side recovering from 1 level to 0 level. An oscillation may occur in the recovery process of the voltage VOUT at the AC side. Specifically, the voltage VOUT at the AC side is 1 level before the current at the AC side decreases to zero. The voltage VOUT at the AC side is reduced to -1 level immediately as the current at the AC side decreases to zero. During reverse recovery of a diode after the current at the AC side decreases to zero, the voltage VOUT at the AC side oscillates between 1 level and -1 level and gradually approaches zero. Moreover, as can be seen from the commutation path during reverse recovery of a diode shown in the Figure 6, junction capacitance C_{ce2} in the inner transistor T2 of an upper bridge arm of the topology is charged in two paths, and junction capacitance C_{ce3} in the inner transistor T3 of a lower bridge arm of the topology discharges in two paths. Therefore, the inner transistor T2 of the upper bridge arm bears a higher switching-off voltage. Specifically, a voltage borne by freewheeling diodes D1 to D4 connected in series is equal to a voltage of the DC bus, i.e., PBUS+NBUS. It is assumed that PBUS+NBUS=1500V, a maximum withstand voltage of each freewheeling diode is 1000V, and PBUS≈NBUS. If a sum of voltages borne by the freewheeling diodes D1, D3, and D4 is less than 500V, the freewheeling diode D2 may bear a voltage greater than 1000V, resulting in a failure of the freewheeling diode D2 due to overvoltage. As a result, the inner transistor T2, i.e., an element at an inner transistor position of the upper bridge arm is prone to failure due to overvoltage stress. Similarly, the inner transistor T3, i.e., an element at an inner transistor position of the lower bridge arm, is prone to failure due to overvoltage stress in a case shown in Figures 7 and 8.

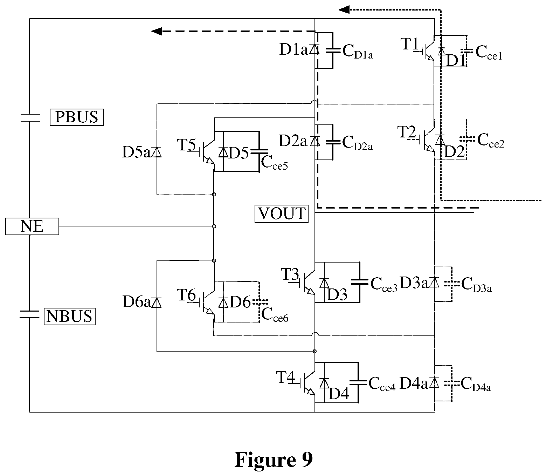

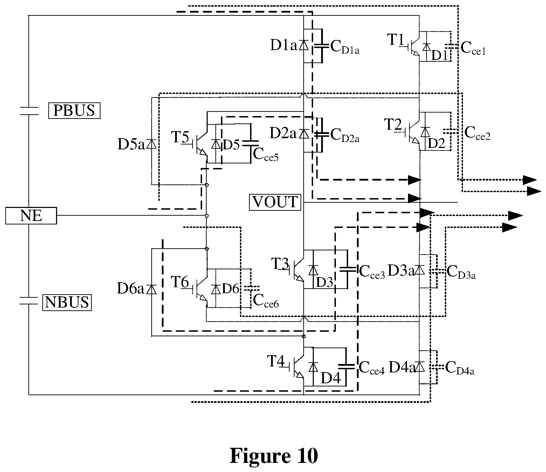

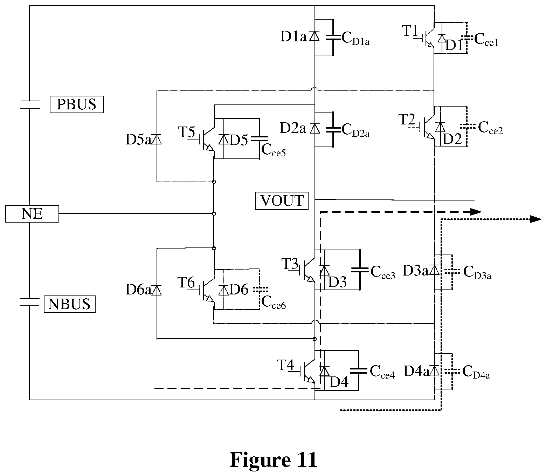

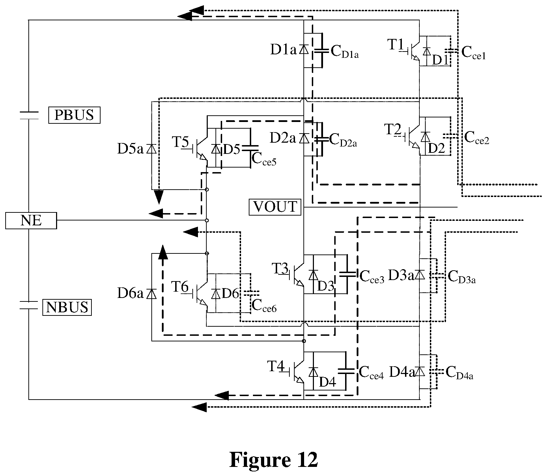

For the separate package structure of the three-level ANPC topology shown in Figure 2, in a case that the topology is switched from the operating mode to the shutdown mode if the current at the AC side is negative, commutation paths when all switching transistors in the topology are switched off are shown as two kinds of dashed lines with arrows in Figure 9, and commutation paths during reverse recovery of a diode after the current at the AC side decreases to zero are shown as two kinds of dashed lines with arrows in Figure 10. In a case that the topology is switched from the operating mode to the shutdown mode if the current at the AC side is positive, commutation paths when all switching transistors in the topology are switched off are shown as two kinds of dashed lines with arrows in Figure 11, and commutation paths during reverse recovery of a diode after the current decreases to zero are shown as two kinds of dashed lines with arrows in Figure 12.

It can be seen from the Figures 9 and 10 that the voltage VOUT at the AC side of the topology oscillates between 1 level and -1 level and gradually approaches zero during reverse recovery of independent diodes D1a to D6a and anti-parallel diodes D1 to D6 after the current at the AC side decreases to zero. Moreover, as can be seen from the commutation paths during the reverse recovery of a diode shown in the Figure 10, junction capacitance C_{ce2} in the inner transistor T2 of the upper bridge arm in one power module is charged in two paths, and junction capacitance C_{D2a} in the independent diode D2a of the upper bridge arm in another power module is also charged in two paths. The inner transistor T2 and the independent diode D2a both are elements at an inner transistor position of the upper bridge arm of the topology, i.e., the elements at the inner transistor position of the upper bridge arm bear a higher switching-off voltage in this situation. As a result, the elements at the inner transistor position of the upper bridge arm are prone to failure due to overvoltage stress. Similarly, elements at an inner transistor position of the lower bridge arm, i.e., the inner transistor T3 and the independent diode D3 are prone to failure due to overvoltage stress in a case of the Figures 11 and 12.

Similarly, for structures shown in the Figures 3 and 4, in a case that the topology is switched from the operating mode to the shutdown mode if the current at the AC side is negative, an element at an inner transistor position of an upper bridge arm is prone to failure due to overvoltage stress; and in a case that the topology is switched from the operating mode to the shutdown mode if the current at the AC side is positive, an element at an inner transistor position of a lower bridge arm is prone to failure due to overvoltage stress.

In view of the above descriptions, a method for controlling a power converter is provided according to the present disclosure, to solve the problem of a failure of an element at an inner transistor position in a power conversion topology due to overvoltage stress in a shutdown mode in the conventional technology

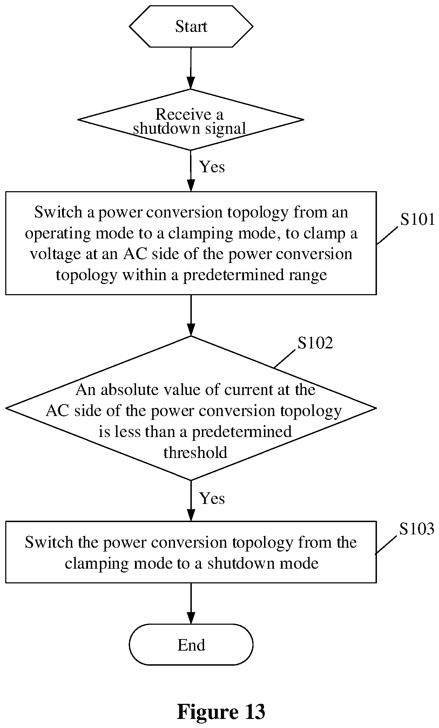

The power converter includes a power conversion topology of at least one phase, and the power conversion topology is a three-level topology such as a three-level ANPC topology or a three-level NPC topology. Referring to Figure 13, the method for controlling the power converter includes the following steps S101 to S103.

In step S101, the power conversion topology is switched from an operating mode to a clamping mode upon receiving a shutdown signal, to clamp a voltage at an AC side of the power conversion topology within a predetermined range.

Receiving the shutdown signal indicates that the power converter is to switch the power conversion topology to the shutdown mode described hereinbefore. A clamping mode of the power conversion topology is additionally set between the operating mode and the shutdown mode in the embodiment, to clamp the voltage VOUT at the AC side of the power conversion topology within the predetermined range, in order to avoid the problem of a failure of an element at an inner transistor position in a power conversion topology due to overvoltage stress during reverse recovery of a diode in a shutdown mode. The voltage VOUT at the AC side remains within the predetermined range after the current at the AC side of the power conversion topology decreases to zero, and thus a half-bridge arm of the power conversion topology bears a controllable voltage, thereby avoiding a failure of an element at the inner transistor position due to overvoltage stress during reverse recovery of a diode. Therefore, the clamping mode is for clamping the voltage at the AC side of the power conversion topology within the predetermined range.

The predetermined range is determined based on the direction of the current at the AC side of the power conversion topology, and details are as follows.
(1) The predetermined range is greater than or equal to a neutral point potential of the DC side of the power conversion topology if the current at the AC side of the power conversion topology flows into the power conversion topology.

Taking the structure shown in the Figure 1 as an example, if the current at the AC side of the power conversion topology flows into the power conversion topology, i.e., the current at the AC side is negative, distinguishing from the embodiments shown in the Figures 5 and 6, the clamping mode is set in the embodiment to control the power converter topology to realize that the voltage VOUT at the AC side is greater than or equal to the neutral point potential NE of the DC bus after an absolute value of current at the AC side of the power converter topology is less than a predetermined threshold. In such case, a voltage borne by the lower bridge arm of the power conversion topology, i.e., a voltage borne by the freewheeling diodes D3 and D4 connected in series, is greater than or equal to the lower half bus voltage NBUS, thus ensuring that a voltage borne by the upper bridge arm of the power conversion topology, i.e., a voltage borne by the freewheeling diodes D1 and D2 connected in series, is less than or equal to the upper half bus voltage PBUS, so as to avoid the failure of the freewheeling diode D2 due to overvoltage stress, i.e., to avoid the failure of the inner transistor T2 due to overvoltage stress.

Similarly, for the structure shown in the Figure 2, if the current at the AC side is negative, the power converter topology is controlled to enter the clamping mode, so that the voltage VOUT at the AC side is greater than or equal to the neutral point potential NE of the DC bus, thereby avoiding the failures of the inner transistor T2 and the independent diode D2a due to overvoltage stress.

That is, for the three-level ANPC topology, if the current at the AC side is negative, a failure of an element at the inner transistor position of the upper bridge arm (e.g., the inner transistor T2 shown in the Figure 1 or the inner transistor T2 and the independent diode D2a shown in the Figure 2) due to overvoltage stress may be avoided by entering the clamping mode.

Similarly, for both structures of the three-level NPC topology shown in the Figures 3 and 4, if the current at the AC side is negative, a failure of an element at the inner transistor position of the upper bridge arm (e.g., the inner transistor T2 shown in the Figure 3 or the inner transistor T2 and the independent diode D2a shown in the Figure 4) due to overvoltage stress may be avoided by entering the clamping mode.

(2) The predetermined range is less than or equal to the neutral point potential of the DC side of the power conversion topology if the current at the AC side of the power conversion topology outflows from the power conversion topology.

For structures shown in the Figures 1 to 4, if the current at the AC side of the power conversion topology outflows from the power conversion topology, i.e., the current at the AC side is positive, the voltage VOUT at the AC side of the power conversion topology is less than or equal to the neutral point potential NE of the DC bus by controlling the power converter topology to enter the clamping mode. As a result, a voltage borne by the lower bridge arm of the power conversion topology, i.e., a voltage borne by freewheeling diodes D3 and D4 connected in series, is less than or equal to the lower half bus voltage NBUS, thereby avoiding a failure of an element at the inner transistor position of the lower bridge arm (e.g., the inner transistor T3 shown in the Figure 1 or 3, or the inner transistor T3 and the independent diode D3a shown in the Figure 2 or 4) due to overvoltage stress.

In step S102, it is determined whether an absolute value of the current at the AC side of the power conversion topology is less than the predetermined threshold.

The predetermined threshold is not limited, as long as the predetermined threshold reflects that the current at the AC side is substantially zero or close to zero, depending on specific application scenario. All implementations fall within the protection scope of the present disclosure.

If the absolute value of the current at the AC side of the power conversion topology is less than the predetermined threshold, step S103 is performed.

In step S103, the power conversion topology is switched from the clamping mode to the shutdown mode.

Specifically, the power conversion topology is switched from the clamping mode to the shutdown mode by controlling all switching transistors in the power conversion topology to be switched off. The voltage at the AC side of the power conversion topology is clamped within the predetermined range in step S101, and thus the half-bridge arm of the power conversion topology may bear a controllable voltage, so that a voltage borne by each switching transistor in the half-bridge arm is within a withstand voltage range of the switching transistor, thereby avoiding a failure of an element at the inner transistor position due to overvoltage stress.

With the method for controlling the power converter according to the embodiment of the present disclosure, the power conversion topology is switched from the operating mode to enter the clamping mode upon receiving a shutdown signal, to clamp a voltage at the AC side of the power conversion topology within the predetermined range, and thus the half-bridge arm of the power conversion topology may bear a controllable voltage. Further, the power conversion topology is switched from the clamping mode to the shutdown mode if the absolute value of the current at the AC side of the power conversion topology is less than the predetermined threshold, so that a voltage borne by each switching transistor in the half-bridge arm is within a withstand voltage range of the switching transistor if the power conversion topology enters the shutdown mode, so as to avoid the failure of an element at the inner transistor position in the power conversion topology due to overvoltage stress during reverse recovery of a diode in the shutdown mode.

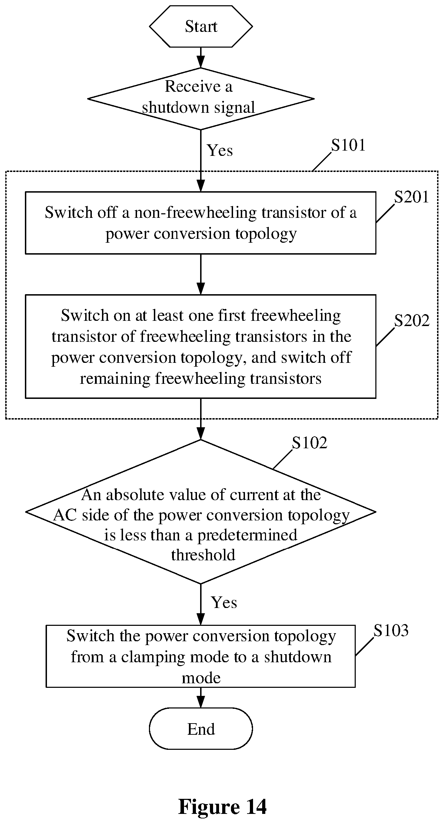

Based on the above embodiments, some details of implementation of step S 101 in the method for controlling a power converter are provided according to the embodiment. For example, as shown in Figure 14, the process of controlling the power conversion topology from the operating mode to enter the clamping mode may specifically include the following steps S201 to S202.

In step S201, a non-freewheeling transistor of the power conversion topology is switched off.

As described above, a freewheeling transistor is a switching transistor forming a zero-level path in a power conversion topology, such as inner transistors T2 and T3, and clamping transistors T5 and T6 shown in the Figures 1 and 2, or the inner transistors T2 and T3 shown in the Figures 3 and 4. A non-freewheeling transistor is a switching transistor other than the freewheeling transistor in an inverter topology, such as the outer transistors T1 and T4 shown in the Figures 1 to 4.

Step S202 may be performed if all non-freewheeling transistors are switched off.

In step S202, at least one first freewheeling transistor of freewheeling transistors in the power conversion topology is switched on, and remaining freewheeling transistors are switched off.

The first freewheeling transistor is defined as: a freewheeling transistor including a freewheeling diode with a conduction direction that is the same as the direction of the current at the AC side of the power conversion topology. For example, for the three-level ANPC topology shown in the Figures 1 and 2, if the current at the AC side is negative, i.e., the current at the AC side flows into the power conversion topology, a conduction direction of the freewheeling diodes D2 and D6 is the same as the direction of current flowing into the power conversion topology. In such case, the first freewheeling transistor refers to the inner transistor T2 and the clamping transistor T6. Similarly, if the current at the AC side is positive, i.e., the current at the AC side outflows from the power conversion topology, the first freewheeling transistor refers to the inner transistor T3 and the clamping transistor T5. For the three-level NPC topology shown in the Figures 3 and 4, the first freewheeling transistor refers to the inner transistor T2 if the current at the AC side is negative, and the first freewheeling transistor refers to the inner transistor T3 if the current at the AC side is positive.

Since the first freewheeling transistor depends on the direction of the current at the AC side of the power conversion topology, the process of switching on at least one first freewheeling transistor of freewheeling transistors in the power conversion topology in step S202 may include the following steps (1) and (2).

In step (1), the direction of the current at the AC side of the power conversion topology is determined from a detection result of the current at the AC side of the power conversion topology.

For example, in a case that the current at the AC side is detected as negative, it is determined that the current at the AC side of the power conversion topology flows into the power conversion topology. In a case that the current at the AC side is detected as positive, it is determined that the current at the AC side of the power conversion topology outflows from the power conversion topology.

In step (2), the first freewheeling transistor is determined based on the direction of the current at the AC side of the power conversion topology, and the first freewheeling transistor is switched on.

For the three-level NPC topology shown in the Figures 3 and 4, if the current at the AC side of the power conversion topology flows into the power conversion topology, the inner transistor T2 at the upper bridge arm is determined as the first freewheeling transistor and the inner transistor T2 is switched on. If the current at the AC side of the power conversion topology outflows from the power conversion topology, the inner transistor T3 at the lower bridge arm is determined as the first freewheeling transistor and the inner transistor T3 is switched on.

For the three-level ANPC topology shown in the Figures 1 and 2, if the current at the AC side of the power conversion topology flows into the power conversion topology, the first freewheeling transistor includes at least one of the inner transistor T2 at the upper bridge arm of the power conversion topology and the clamping transistor T6 at the lower bridge arm of the power conversion topology. If the current at the AC side of the power conversion topology outflows from the power conversion topology, the first freewheeling transistor includes at least one of the inner transistor T3 at the lower bridge arm of the power conversion topology and the clamping transistor T5 at the upper bridge arm of the power conversion topology. Since the switched-on first freewheeling transistor varies with the direction of the current at the AC side, there may be multiple optional implementations for performing the step (2), and an inner transistor and a clamping transistor have a specific switching characteristic in each of the implementations.

### First implementation

In step 1, upon receiving the shutdown signal, a controller of the power converter switches off the outer transistors T1 and T4. After the outer transistors are switched off, step 2 is performed.

In step 2, the current at the AC side of the power conversion topology is detected in a real time manner. Depending on a detection result of the current at the AC side, there may be the following two cases.

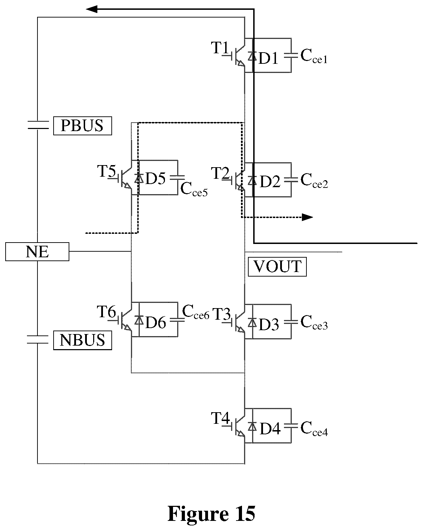

In the first case, if the current at the AC side is negative, i.e., the current at the AC side flows into the power conversion topology, the inner transistor T2 is determined as the first freewheeling transistor and is switched on. In addition, other freewheeling transistors T3, T5 and T6 are switched off. A sequence of the switching on and the switching off is not limited, as long as the switching on and the switching off are completed before the current at the AC side decreases to the predetermined threshold. In a case that the inner transistor T2 is switched on, the freewheeling diode D5 is switched on automatically if the voltage VOUT at the AC side of the power conversion topology is less than the neutral point potential NE of the DC bus. Taking the structure shown in the Figure 1 as an example for illustration, in addition to the commutation path shown in Figure 5, the commutation path further includes a path shown as a dashed line with an arrow in Figure 15, i.e., the path is from the neutral point of the DC bus through the freewheeling diode D5 and the inner transistor T2 to the AC side in sequence. Potentials at all points in the path are equal to each other, ensuring the voltage VOUT at the AC side being greater than or equal to the neutral point potential NE of the DC bus.

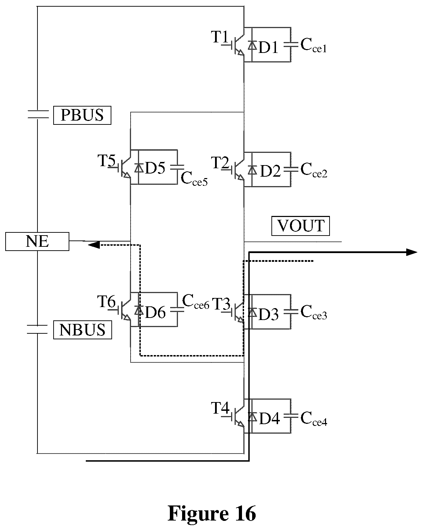

In the second case, if the current at the AC side is positive, i.e., the current at the AC side outflows from the power conversion topology, the inner transistor T3 is determined as the first freewheeling transistor and is switched on. In addition, other freewheeling transistors T2, T5, and T6 are switched off. A sequence of the switching on and the switching off is not limited, as long as the switching on and the switching off are completed before the current at the AC side decreases to the predetermined threshold. In a case that the inner transistor T3 is switched on, the freewheeling diode D6 is switched on automatically if the voltage VOUT at the AC side of the power conversion topology is greater than the neutral point potential NE of the DC bus. Still taking the structure shown in the Figure 1 as an example for illustration, in addition to the commutation path shown in Figure 7, the commutation path further includes a path shown as a dashed line with an arrow in Figure 16, i.e., the path is from the neutral point of the DC bus through the inner transistor T3 and the freewheeling diode D6 and to the AC side in sequence. Potentials at all points in the path are equal to each other, ensuring the voltage VOUT at the AC side being less than or equal to the neutral point potential NE of the DC bus.

In the third step, if the current at the AC side of the power conversion topology is detected to be less than the predetermined threshold, all switching transistors T1 to T6 are switched off.

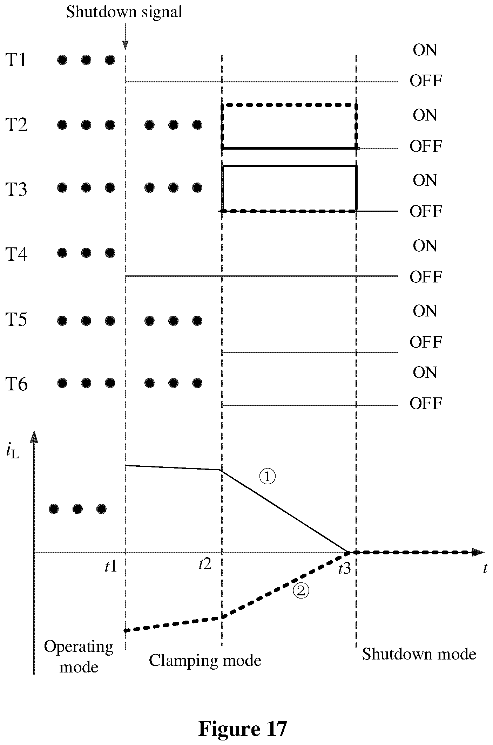

Figure 17 shows a switching sequence diagram of all switching transistors in the two cases of the first implementation. The power conversion topology is in the operating mode before a time instant t1. At the time instant t1, receiving the shutdown signal for switching off the switching transistors, the controller controls the power conversion topology to enter the clamping state, where the step 1 of switching off the outer transistors T1 and T4 is performed firstly. At a time instant t2, the outer transistors T1 and T4 are off, and the step 2 of switching off the clamping transistors T5 and T6 is performed. Meanwhile, the first freewheeling transistor is determined from the inner transistors T2 and T3 based on the direction of the current at the AC side of the power conversion topology, so as to determine whether the inner transistors T2 and T3 are switched on or off. Specifically, referring to Figure 17, if the current i_{L} at the AC side is negative, as shown in curve (2) of the Figure 17, the inner transistor T2 is switched on and the inner transistor T3 is switched off. On the contrary, if the current i_{L} at the AC side is positive, as shown in curve ① of the Figure 17, the inner transistor T3 is switched on and the inner transistor T2 is switched off. After the time instant t2, since the first freewheeling transistor is switched on, a path (shown as the dashed line with the arrow in Figure 15 or Figure 16) in the opposite current direction of the previous commutation path is added, so that the absolute value of the current i_{L} at the AC side decreases rapidly, and the current i_{L} at the AC side decreases to zero at a time instant t3. Since the controller samples at a time interval, there may be a delay for the controller to detect that the current at the AC side i_{L} is less than the predetermined threshold. Then, the first freewheeling transistor T2 or T3 may be switched off, causing the power conversion topology to enter the shutdown mode.

In the shutdown mode, a process of the reverse recovery of a diode is shown as the commutation path in the Figure 6 or 8. In such case, the voltage VOUT at the AC side is clamped, so that each half-bridge arm bears a relatively low voltage. Therefore, even if the first freewheeling transistor T2 or T3 is charged in two paths, a voltage borne by the first freewheeling transistor T2 or T3 is within respective withstand voltage range.

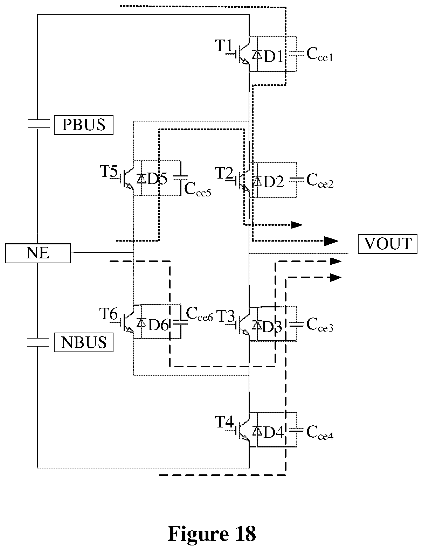

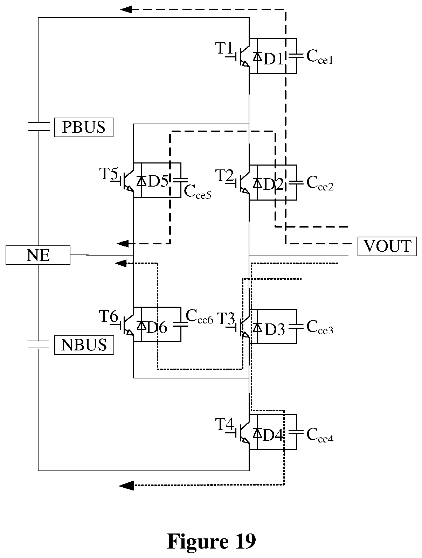

It should be noted that the voltage VOUT at the AC side is also clamped during a time period from the time instant t3 when the current i_{L} at the AC side decreases to zero to a time instant when the first freewheeling transistor T2 or T3 is switched off, so that the voltage borne by the first freewheeling transistor T2 or T3 is also within the respective withstand voltage range. In addition, during the time period, the commutation path during reverse recovery of a diode if the current i_{L} at the AC side is negative is shown in Figure 18. Figure 18 is different from the Figure 6 in that since the inner transistor T2 is not switched off, the two charging paths pass through a main body of the inner transistor T2 instead of passing through the junction capacitance C_{ce2} in the inner transistor T2, and thus the voltage borne by the inner transistor T2 is further reduced. Similarly, the commutation path during reverse recovery of a diode if the current i_{L} at the AC side is positive is shown in Figure 19, and the voltage borne by the inner transistor T3 is also further reduced during this period.

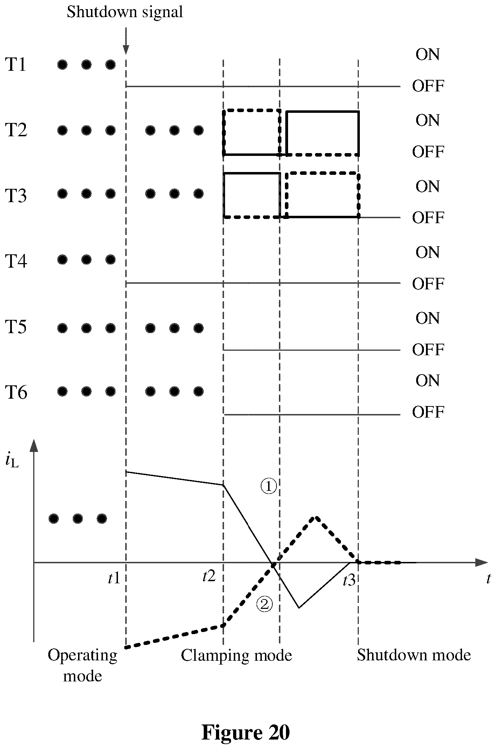

As described above, the controller samples at a time interval, the direction of the current at the AC side of the power conversion topology may be reversed between two successive samplings. As shown in Figure 20, in a case that the directions of the current at the AC side obtained from two successive samplings are different, the inner transistors T2 and T3 may be switched on or off during the two samplings until the current i_{L} at the AC side is detected to be less than the predetermined threshold. In an embodiment, step S202 is performed in a real time manner or periodically. Specifically, after each time the detection result of the current at the AC side is obtained, steps (1) and (2) in step S202 may be performed in a real time manner; or steps (1) and (2) in step S202 may also be performed periodically based on the latest obtained detection result of the current at the AC side, which is not limited herein, depending on an actual application scenario. All implementations fall within the protection scope of the present disclosure.

### Second implementation

In step 1, upon receiving the shutdown signal, the controller switches off the outer transistors T1 and T4. After the outer transistors are switched off, step 2 is performed.

In step 2, the current at the AC side of the power conversion topology is detected in a real time manner. Depending on a detection result of the current at the AC side, there may be the following two cases.

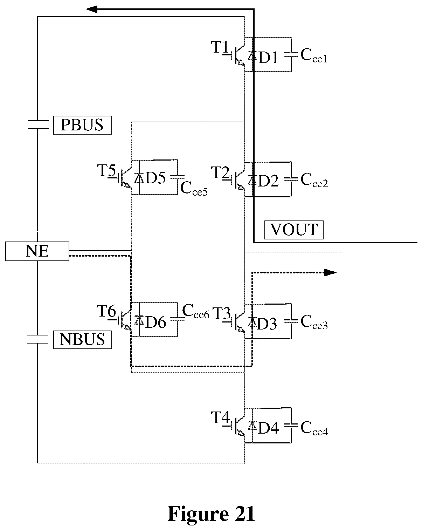

In the first case, if the current at the AC side is negative, i.e., the current at the AC side flows into the power conversion topology, the clamping transistor T6 is determined as the first freewheeling transistor and is switched on. In addition, other freewheeling transistors T2, T3 and T5 are switched off. A sequence of the switching on and the switching off is not limited, as long as the switching on and the switching off are completed before the current at the AC side decreases to the predetermined threshold. In a case that the clamping transistor T6 is switched on, the freewheeling diode D3 is switched on automatically if the voltage VOUT at the AC side of the power conversion topology is less than the neutral point potential NE of the DC bus. Taking the structure shown in the Figure 1 as an example for illustration, in addition to the commutation path shown in Figure 5, the commutation path further includes a path shown as a dashed line with an arrow in Figure 21, i.e., the path is from the neutral point of the DC bus through the clamping transistor T6 and the freewheeling diode D3 and to the AC side in sequence. Potentials at all points in the path are equal to each other, ensuring the voltage VOUT at the AC side being greater than or equal to the neutral point potential NE of the DC bus.

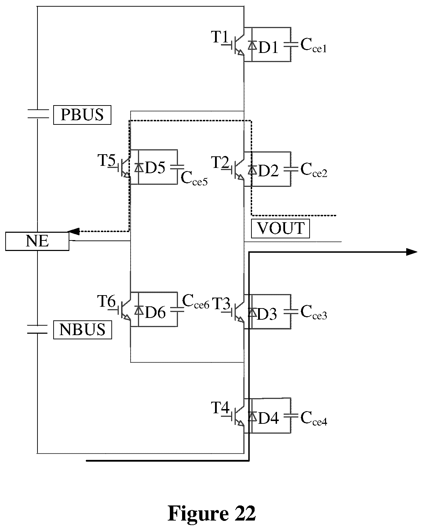

In the second case, if the current at the AC side is positive, i.e., the current at the AC side outflows from the power conversion topology, the clamping transistor T5 is determined as the first freewheeling transistor and is switched on. In addition, other freewheeling transistors T2, T3, and T6 are switched off. A sequence of the switching on and the switching off is not limited, as long as the switching on and the switching off are completed before the current at the AC side decreases to the predetermined threshold. In a case that the clamping transistor T5 is switched on, the freewheeling diode D2 is switched on automatically if the voltage VOUT at the AC side of the power conversion topology is greater than the neutral point potential NE of the DC bus. Still taking the structure shown in the Figure 1 as an example for illustration, in addition to the commutation path shown in Figure 7, the commutation path further includes a path shown as a dashed line with an arrow in Figure 22, i.e., the path is from the AC side through the freewheeling diode D2 and the clamping transistor T5 and to the neutral point of the DC bus in sequence. Potentials at all points in the path are equal to each other, ensuring the voltage VOUT at the AC side being less than or equal to the neutral point potential NE of the DC bus.

In step 3, if the current at the AC side of the power conversion topology is detected to be less than the predetermined threshold, all switching transistors T1 to T6 are switched off.

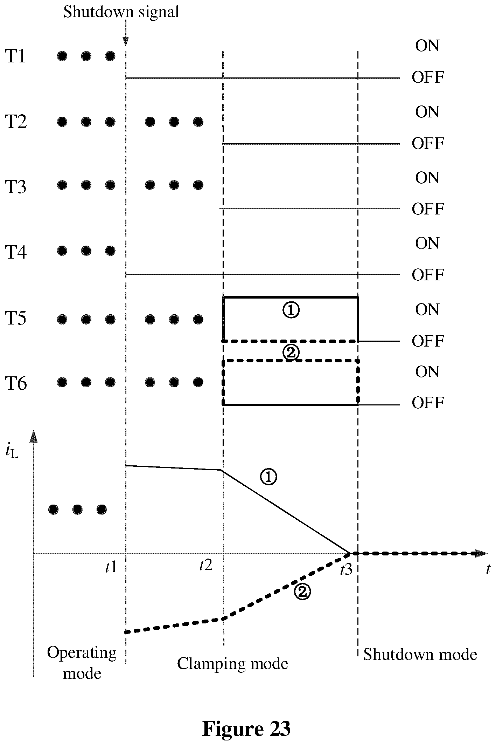

Figure 23 shows a switching sequence diagram of all switching transistors in the two cases of the second implementation. The power conversion topology is in the operating mode before a time instant t1. At the time instant t1, receiving the shutdown signal for switching off the switching transistors, the controller controls the power conversion topology to enter the clamping state, where the step 1 of switching off the outer transistors T1 and T4 is performed firstly. At a time instant t2, the outer transistors T1 and T4 are off, and the step 2 of switching off the inner transistors T2 and T3 is performed. Meanwhile, the first freewheeling transistor is determined from the clamping transistors T5 and T6 based on the direction of the current at the AC side of the power conversion topology, so as to determine whether the clamping transistors T5 and T6 are switched on or off. Specifically, referring to Figure 23, if the current i_{L} at the AC side is negative, as shown in curve ② of the Figure 23, the clamping transistor T6 is switched on and the clamping transistor T5 is switched off. On the contrary, if the current i_{L} at the AC side is positive, as shown in curve ① of the Figure 23, the clamping transistor T5 is switched on and the clamping transistor T6 is switched off. After the time instant t2, since the first freewheeling transistor is switched on, a path (shown as the dashed line with an arrow in Figure 21 or Figure 22) in the opposite current direction of the previous commutation path is added, so that the absolute value of the current i_{L} at the AC side decreases rapidly, and the current i_{L} at the AC side decreases to zero at a time instant t3. Since the controller samples at a time interval, there may be a delay for the controller to detect that the current at the AC side i_{L} is less than the predetermined threshold. Then, the first freewheeling transistor T5 or T6 may be switched off, causing the power conversion topology to enter the shutdown mode.

In the shutdown mode, process of the reverse recovery of a diode is shown as the commutation path in the Figure 6 or Figure 8. In such case, the voltage VOUT at the AC side is clamped, so that each half-bridge arm bears a relatively low voltage. Therefore, even if the inner transistors T2 or T3 is charged in two paths, a voltage borne by the inner transistor T2 or T3 is within respective withstand voltage range.

It should be noted that during a time period from the time instant t3 when the current i_{L} at the AC side decreases to zero to a time instant when the first freewheeling transistor T5 or T6 is switched off, although the charging paths of the inner transistor T2 or T3 fail to be changed in order to further reduce the voltage borne by the inner transistor T2 or T3, the voltage VOUT at the AC side is still clamped, so that the voltages borne by the inner transistors T2 and T3 are within respective withstand voltage ranges.

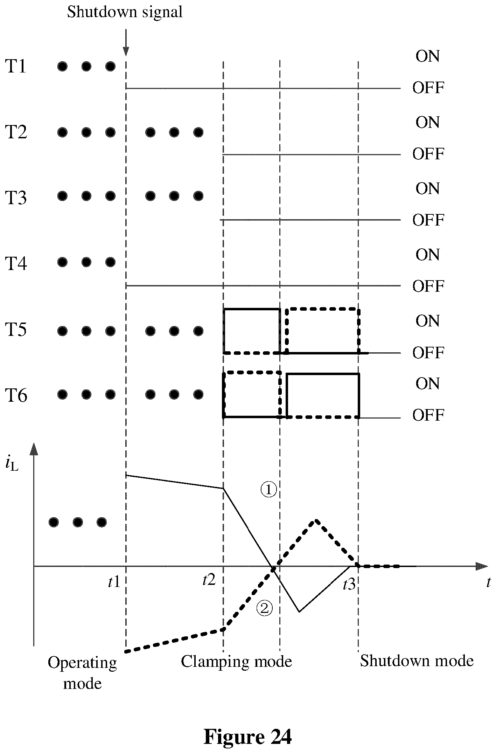

In addition, the S202 is preferably performed in a real time manner or periodically. In an embodiment, in a case that the directions of the current at the AC side obtained from two successive samplings are different, the clamping transistors T5 and T6 may also be switched on or off during the two samplings, until the current i_{L} at the AC side is detected to be less than the predetermined threshold, as shown in Figure 24.

### Third implementation

In step 1, upon receiving the shutdown signal, the controller for switching transistors switches off the outer transistors T1 and T4. After the outer transistors are switched off, a second step is executed.

In step 2, the current at the AC side of the converter is detected in a real time manner. Depending on a detection result of the current at the AC side, there may be the following two cases.

In the first case, if the current at the AC side is negative, both the inner transistor T2 and the clamping transistor T6 are determined as the first freewheeling transistors and are switched on. In addition, the inner transistor T3 and the clamping transistor T5 are switched off. A sequence of the switching on and the switching off is not limited, as long as the switching on and the switching off are completed before the current at the AC side decreases to the predetermined threshold. In a case that the first freewheeling transistors T2 and T6 are switched on, the freewheeling diodes D3 and D5 are switched on automatically if the voltage VOUT at the AC side of the power conversion topology is less than the neutral point potential NE of the DC bus. Taking the structure shown in the Figure 1 as an example for illustration, in addition to the commutation path shown in Figure 5, the commutation path further includes paths shown as dashed lines with arrows shown in the Figures 15 and 21, thereby ensuring the voltage VOUT at the AC side being greater than or equal to the neutral point potential NE of the DC bus.

In the second case, if the current at the AC side is positive, the inner transistor T3 and the clamping transistor T5 are determined as the first freewheeling transistors and are switched on. In addition, the inner transistor T2 and the clamping transistor T6 are switched off. A sequence of the switching on and the switching off is not limited, as long as the switching on and the switching off are completed before the current at the AC side decreases to the predetermined threshold. In a case that the first freewheeling transistors T3 and T5 are switched on, the freewheeling diodes D2 and D6 are switched on automatically if the voltage VOUT at the AC side of the power conversion topology is greater than the neutral point potential NE of the DC bus. Still taking the structure shown in the Figure 1 as an example for illustration, in addition to the commutation path shown in Figure 7, the commutation path further includes paths shown as dashed lines with arrows in the Figures 16 and Figure 22, thereby ensuring the voltage VOUT at the AC side being less than or equal to the neutral point potential NE of the DC bus.

In step 3, if the current at the AC side of the power conversion topology is detected to be less than the predetermined threshold, all switching transistors T1 to T6 are switched off.

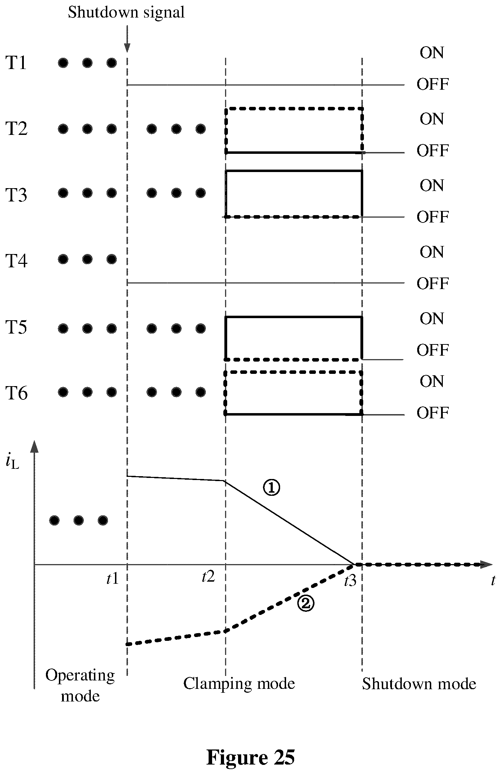

Figure 25 shows a switching sequence diagram of all switching transistors in the two cases of the third implementation. The power conversion topology is in the operating mode before a time instant t1. At the time instant t1, receiving the shutdown signal for switching off the switching transistors, the controller controls the power conversion topology to enter the clamping state, where the step 1 of switching off the outer transistors T1 and T4 is performed firstly. At a time instant t2, the outer transistors T1 and T4 are off, and the step 2 of determining two of the freewheeling transistors T2, T3, T5, and T6 as the first freewheeling transistors based on the direction of the current at the AC side of the power conversion topology, so as to determine whether the freewheeling transistors T2, T3, T5, and T6 are switched on or off. Specifically, referring to Figure 25, if the current i_{L} at the AC side is negative, as shown in curve ② of the Figure 25, the first freewheeling transistors T2 and T6 are switched on and other freewheeling transistors T3 and T5 are switched off. On the contrary, if the current i_{L} at the AC side is positive, as shown in curve ① of the Figure 25, the first freewheeling transistors T3 and T5 are switched on and other freewheeling transistors T2 and T6 are switched off. After the time instant t2, since the two first freewheeling transistors are switched on, two paths in the opposite current direction of the previous commutation path are added, so that the absolute value i_{L} of the current at the AC side decreases rapidly, and the current i_{L} at the AC side decreases to zero at a time instant t3. Since the controller samples at a time interval, there may be a delay for the controller to detect that the current at the AC side i_{L} is less than the predetermined threshold. Then, the first freewheeling transistors may be switched off, causing the power conversion topology to enter the shutdown mode.

From the time instant t3 when the current i_{L} at the AC side decreases to zero to the end of the shutdown mode, since the voltage VOUT at the AC side is clamped, so that each half-bridge arm bears a relatively low voltage. Therefore, even if the inner transistors T2 or T3 is charged in two paths, the voltages borne by the inner transistors T2 or T3 is within respective withstand voltage range.

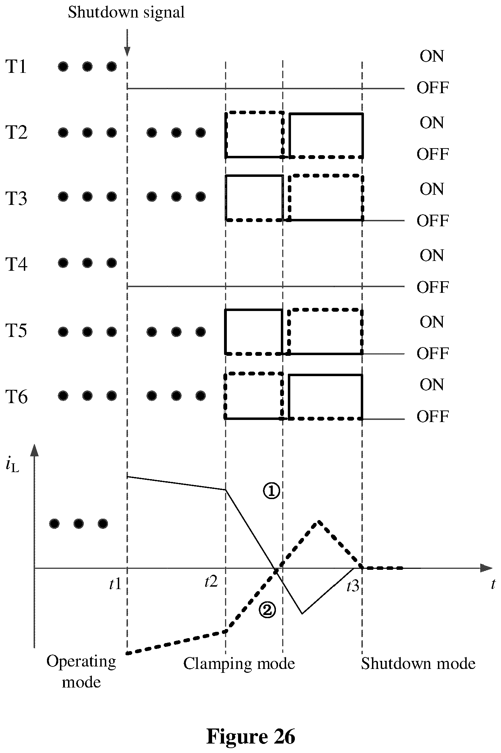

In addition, the S202 is preferably performed in a real time manner or periodically. In an embodiment, in a case that the directions of the current at the AC side obtained from two successive samplings are different, the freewheeling transistors T2, T3, T5 and T6 may also be switched on or off during the two samplings, until the current i_{L} at the AC side is detected to be less than the predetermined threshold, as shown in Figure 26.

It should be noted that the above description is illustrated with reference to the structure shown in the Figure 1. For the structure shown in the Figure 2, since the switching transistors to be controlled are same as those in the Figure 1, the foregoing control processes and switching sequence diagrams are also applicable to the structure shown in the Figure 2, which is not described herein in detail.

As can be known from the above description, for the three-level ANPC topology and the three-level NPC topology with various structures, the voltage VOUT at the AC side oscillates between 1 level and -1 level after the topology enters the shutdown mode, resulting in a failure of an element at the inner transistor position (e.g., the inner transistors T2 and T3 shown in the Figure 1 or 3, or the inner transistors T2 and T3 and the independent diodes D2a and D3a shown in the Figure 2 or Figure 4) due to overvoltage stress. With the control method according to the embodiment, the voltage VOUT at the AC side of the corresponding topology is controlled to be within a predetermined range after the topology enters the shutdown mode, thereby avoiding the failure of the element at the inner transistor position due to overvoltage stress.

A power converter is further provided according to another embodiment of the present disclosure. The power converter includes a main circuit and a controller.

The main circuit includes a power conversion topology of at least one phase. For example, the main circuit may include a power conversion topology of one phase or power conversion topologies of three phases. In a case of the power conversion topologies of three phases, DC sides of the power conversion topologies of three phases are connected in parallel to the DC bus, and each of AC sides of the power conversion topologies of three phases serves as one phase of an AC side of the main circuit. In addition, the main circuit may include other circuits, such as at least one preceding-stage conversion circuit. The preceding-stage conversion circuit is connected to the DC side of the power conversion topology via the DC bus and the preceding-stage conversion circuit is controlled by the controller. The preceding-stage conversion circuit is a DC/DC conversion circuit or an AC/DC conversion circuit. The specific structure and working principle of the DC/DC conversion circuit or the AC/DC conversion circuit may be referred to the conventional technology and which is not described herein in detail.

The power conversion topology is a three-level topology. Specifically, the power conversion topology may be a three-level topology such as a three-level ANPC topology (as shown in the Figure 1 or the Figure 2) or a three-level NPC topology (as shown in the Figure 3 or the Figure 4). In addition, the power conversion topology may be in the integral package structure (as shown in the Figure 1 or the Figure 3), or the separate package structure (as shown in the Figure 2 or the Figure 4), depending on specific application scenario. All implementations fall within the protection scope of the present disclosure.

Reference may be made to conventional technology for other structures of the main circuit, which is not described herein in detail. Depending on the structure of the main circuit, the power converter may be a grid-connected inverter, an off-grid inverter, an energy storage converter, or a wind power converter, which is not limited herein.

The main circuit is controlled by the controller, and the controller is configured to perform the method for controlling a power converter according to any one of the foregoing embodiments. Reference may be made to the foregoing embodiments for a specific process and principle of the method, which is not described herein in detail.

With the method for controlling a power converter, the voltage at the AC side of the power converter topology may be clamped within a predetermined range after the power converter topology enters the shutdown mode, thereby avoiding the failure of the element at the inner transistor position due to overvoltage stress. In addition, the power converter may be an ANPC converter of three phases, an ANPC converter of one phase, an NPC converter of three phases, and an NPC converter of one phase in the integral package structure or the separate package structure, depending on the actual application scenario. All implementations fall within the protection scope of the present disclosure.

A power conversion system is further provided according to another embodiment of the present disclosure. The power conversion system includes: a power supply and the power converter according to any one of the foregoing embodiments. The power supply is connected to a power grid and/or a load through the power converter.

The power supply may be implemented as various devices depending on the structure of the main circuit in the power converter. For example, the power supply may be a photovoltaic string, a battery cluster, or a wind turbine, which is not limited herein, and may be determined according to an actual application scenario with reference to conventional technology. All implementations fall within the protection scope of the present disclosure.

In practice, in a case that the main circuit is in a two-stage conversion structure, controllers for respective conversion circuits may be integrally provided, so that the power converter is an integral device. Alternatively, the controllers for the respective conversion circuits may be integrated with the respective conversion circuits in separate devices, which may be determined according to an actual application scenario and is not limited herein. In addition, the number of power converters is not limited, as long as the power converters are connected to corresponding power supplies, which shall fall within the protection scope of the present disclosure.

With the power converter, the power conversion system may have the advantages of the power converter described above, which are not described herein in detail.

Reference may be made to each other of the same and similar parts between the various embodiments in this specification and each embodiment focuses on its differences from other embodiments. In particular, for the system or system embodiments, since they are basically similar to the method embodiments, the description is relatively simple. For relevant details, reference can be made to the description of the method embodiments. The system and system embodiments described above are only illustrative, in which the units described as separate components may or may not be physically separated, and the components shown as units may or may not be physical units, that is, they can be located in one place, or distributed over multiple network elements. Some or all of the modules can be selected according to actual needs to achieve the purpose of the solution of this embodiment. Those skilled in the art can understand and implement the method without any creative effort.

Those skilled in the art may further realize that the units and algorithm steps of each example described in connection with the embodiments disclosed herein can be implemented by electronic hardware, computer software, or a combination of both. In order to clearly illustrate the interchangeability between hardware and software, in the above description, the composition and steps of each example have been generally described according to functions. Whether these functions are performed in hardware or software form depends on the specific application and design constraints of the technical solution. Those skilled in the art may implement the described functionality using different methods for each specific application, but such implementations should not be considered to be beyond the scope of the present disclosure.

With regard to the above description of the disclosed embodiments, the features described in the embodiments in this specification can be replaced or combined with each other to enable those skilled in the art to implement or use the present disclosure. Various modifications to these embodiments will be readily apparent to those skilled in the art, and the generic principles defined herein may be practiced in other embodiments without departing from the scope of the disclosure. Therefore, the present disclosure is not limited to the embodiments shown herein but is to be accorded the widest scope consistent with the principles and novel features disclosed herein.

## Claims

1. A method for controlling a power converter, wherein the power converter comprises a power conversion topology of at least one phase, the power conversion topology is a three-level topology, and the method comprises:
switching the power conversion topology from an operating mode to a clamping mode upon receiving a shutdown signal, to clamp a voltage at an alternating current, AC, side of the power conversion topology within a predetermined range;
determining whether an absolute value of current at the AC side of the power conversion topology is less than a predetermined threshold; and
switching the power conversion topology from the clamping mode to a shutdown mode, if the absolute value of the current at the AC side of the power conversion topology is less than the predetermined threshold.

2. The method for controlling a power converter according to claim 1, wherein
the predetermined range is greater than or equal to a neutral point potential of a direct current, DC, side of the power conversion topology if the current at the AC side of the power conversion topology flows into the power conversion topology; and
the predetermined range is less than or equal to the neutral point potential of the DC side of the power conversion topology if the current at the AC side of the power conversion topology outflows from the power conversion topology.

3. The method for controlling a power converter according to claim 1, wherein the switching the power conversion topology from an operating mode to a clamping mode comprises:
switching off a non-freewheeling transistor of the power conversion topology;
switching on at least one first freewheeling transistor of freewheeling transistors in the power conversion topology; and
switching off remaining freewheeling transistors,
wherein the freewheeling transistor is a switching transistor forming a zero-level path in the power conversion topology, and the first freewheeling transistor is a freewheeling transistor comprising a freewheeling diode with a conduction direction that is the same as a direction of the current at the AC side of the power conversion topology; and the non-freewheeling transistor is a switching transistor in the power conversion topology other than the freewheeling switching transistor.

4. The method for controlling a power converter according to claim 3, wherein the switching on at least one first freewheeling transistor of freewheeling transistors in the power conversion topology comprises:
determining the direction of the current at the AC side of the power conversion topology from a detection result of the current at the AC side of the power conversion topology; and
determining the first freewheeling transistor based on the direction of the current at the AC side of the power conversion topology and switching on the first freewheeling transistor.

5. The method for controlling a power converter according to claim 4, wherein the power conversion topology is a three-level ANPC topology,
the first freewheeling transistor comprises at least one of an inner transistor at an upper bridge arm of the power conversion topology and a clamping transistor at a lower bridge arm of the power conversion topology if the current at the AC side of the power conversion topology flows into the power conversion topology; and
the first freewheeling transistor comprises at least one of an inner transistor at the lower bridge arm of the power conversion topology and a clamping transistor at the upper bridge arm of the power conversion topology if the current at the AC side of the power conversion topology outflows from the power conversion topology.

6. The method for controlling a power converter according to claim 4, wherein the power conversion topology is a three-level NPC topology,
the first freewheeling transistor is an inner transistor at an upper bridge arm of the power conversion topology if the current at the AC side of the power conversion topology flows into the power conversion topology; and
the first freewheeling transistor is an inner transistor at a lower bridge arm of the power conversion topology if the current at the AC side of the power conversion topology outflows from the power conversion topology.

7. The method for controlling a power converter according to any one of claims 3 to 6, wherein the at least one first freewheeling transistor of freewheeling transistors in the power conversion topology is switched on in a real time manner or periodically.

8. The method for controlling a power converter according to any one of claims 1 to 6, wherein the switching the power conversion topology from the clamping mode to a shutdown mode comprises:
switching off all switching transistors in the power conversion topology.

9. A power converter, comprising
a main circuit; and
a controller,
wherein the main circuit comprises a power conversion topology of at least one phase;
the power conversion topology is a three-level topology,
the main circuit is controlled by the controller, and
the controller is configured to perform the method for controlling a power converter according to any one of claims 1 to 8.

10. The power converter according to claim 9, wherein the power conversion topology is a three-level ANPC topology or a three-level NPC topology.

11. The power converter according to claim 9, wherein
the main circuit comprises the power conversion topology of one phase; or
the main circuit comprises the power conversion topologies of three phases, and direct current, DC, sides of the power conversion topologies of three phases are connected in parallel.

12. The power converter according to any one of claims 9 to 11, wherein the power conversion topology is in an integral package structure or a separate package structure.

13. The power converter according to any one of claims 9 to 11, wherein the main circuit further comprises at least one preceding-stage conversion circuit;
the at least one preceding-stage conversion circuit is connected to the DC side of the power conversion topology via a DC bus; and
the at least one preceding-stage conversion circuit is controlled by the controller.

14. The power converter according to claim 13, wherein the at least one preceding-stage conversion circuit is a DC/DC conversion circuit or an AC/DC conversion circuit.

15. A power conversion system, comprising:
a power supply; and
the power converter according to any one of claims 9 to 14,
wherein the power supply is connected to a power grid and/or a load through the power converter.
